# EUROPEAN PATENT APPLICATION

(11) **EP 4 518 488 A1**
(43) Date of publication of application: **05.03.2025**
(21) Application number: 23794894.8
(22) Date of filing: 24.03.2023
(51) Int. Cl.: H04W 72/04

(54) **INFORMATION PROCESSING METHOD AND APPARATUS, AND READABLE STORAGE MEDIUM**

(30) Priority: 29.04.2022 CN 202210475485
(71) Applicant: Datang Mobile Communications Equipment Co., Ltd., Beijing 100085 (CN)
(72) Inventor: ZHAO, Yue, Beijing 100085 (CN); SI, Qianqian, Beijing 100085 (CN); GAO, Xuejuan, Beijing 100085 (CN); XING, Yanping, Beijing 100085 (CN); LI, Shupeng, Beijing 100085 (CN)
(74) Representative: dompatent von Kreisler Selting Werner - Partnerschaft von Patent- und Rechtsanwälten mbB
(86) International application number: PCT/CN2023/083710
(87) International publication number: WO 2023/207459

(57) **Abstract**

The present disclosure relates to the communications technology and provides an information processing method, device, and readable storage medium to improve the transmission performance of a terminal. The method includes: receiving, by the terminal, first information from network device; determining, by the terminal, whether the transmission on candidate frequency domain resources is effective based on the said first information; wherein the terminal is configured with a target sub-band, the transmission direction corresponding to the target sub-band differs from other frequency domain resources; the candidate frequency domain resources include the target sub-band or other frequency domain resources.

## Description

### CROSS-REFERENCE TO RELATED APPLICATION

The present application claims priority to the Chinese patent application No. 202210475485.4 filed on April 29, 2022, a disclosure of which is incorporated herein by reference in its entirety.

### TECHNICAL FIELD

The present disclosure relates to the field of communications technologies, in particular to an information processing method, device and readable storage medium.

### BACKGROUND

To address the issues of coverage, latency, and capacity in uplink transmission under Time Domain Duplex (TDD) mode, the technology of non-overlapping sub-band full duplex will be explored. This involves dividing frequency domain resources into multiple non-overlapping sub-bands, with uplink and downlink frequency domain resources located on different sub-bands. This is referred to as full duplex herein.

The current approach is based on the network/base station having the capability to transmit and receive simultaneously (referred to as duplex capability). That is, the base station can perform uplink and downlink transmissions with different user device (UE) at the same time. However, the UEs lack duplex capability and can only transmit uplink or receive downlink at any given moment.

With technological advancements, for full-duplex terminals, the base station may configure specific sub-bands for uplink (downlink) transmission. In these configured specific sub-bands, the transmission direction for a terminal may differ from the transmission direction indicated by traditional TDD configuration information. When the transmission direction in the configured specific sub-bands differs from that indicated by conventional TDD configuration information, the terminal may face conflicting transmission channels/signals scheduled on the resources corresponding to both transmission directions. In such cases, the terminal may be unable to determine how to proceed with the transmission.

### SUMMARY

The present disclosure provides an information processing method, device, and readable storage medium to improve the transmission performance of a terminal.

In a first aspect, the present disclosure provides an information processing method, comprising:
receiving, by the terminal, first information from network device;
determining, by the terminal, whether the transmission on candidate frequency domain resources is valid based on the first information;
wherein the terminal is configured with a target sub-band, the transmission direction corresponding to the target sub-band differs from other frequency domain resources;
the candidate frequency domain resources include the target sub-band or other frequency domain resources.

Optionally, determining, by the terminal, whether transmission on candidate frequency domain resources is valid based on the first information includes:
determining, by the terminal, the first transmission direction of a first target time unit based on the first information;
for the candidate frequency domain resources within the first target time unit, if the transmission direction on the candidate frequency domain resources within the first target time unit is the same as the first transmission direction, determining, by the terminal, that the transmission on the candidate frequency domain resources within the first target time unit is valid.

Optionally, determining, by the terminal, that the transmission on the candidate frequency domain resources within the first target time unit is valid includes:
for the transmission on the candidate frequency domain resources within the first target time unit, if the second transmission direction of the transmission does not conflict with the transmission direction of the candidate frequency domain resources, and the second transmission direction is the same as the first transmission direction, determining, by the terminal, the transmission is valid.

Optionally, the first information is user-specific first information, or the first information is user group-specific first information.

Optionally, if the first information is user-specific first information, receiving, by the terminal, first information from network device includes:
receiving, by the terminal, the first information transmitted by the network device via Radio Resource Control (RRC) signaling or Downlink Control Information (DCI).

Optionally, if the first information is user group-specific first information, receiving, by the terminal, first information from network device includes:
receiving, by the terminal, the first information transmitted by the network device via a target DCI format.

Optionally, the target DCI format includes DCI Format 2_0;
wherein the Radio Network Temporary Identifier (RNTI) of the DCI Format 2_0 differs from the RNTI of the DCI Format 2_0 used to indicate Slot Format Indication (SFI); or
the target DCI format is used to indicate the transmission direction of the first target time unit; or
the target DCI format includes indication information, which indicates whether the target DCI format is used to indicate transmission direction information in full-duplex mode.

Optionally, determining, by the terminal, whether transmission on candidate frequency domain resources is valid based on the first information includes:
determining, by the terminal, candidate frequency domain resource information in a second target time unit based on the first information;
determining, by the terminal, the frequency domain resources of the terminal in the second target time unit based on the candidate frequency domain resource information;
determining, by the terminal, that the transmission on the frequency domain resources in the second target time unit is valid.

Optionally, determining, by the terminal, the effective time of the first information through one or more manners includes:
determining the effective time by the second information in the first information, where the second information indicates the effective time;
the effective time is a predefined time unit;
determining by the time the terminal detects the first information.

The target sub-band is a resource in the available frequency domain resources for uplink or downlink transmission;
the other frequency domain resources are those available frequency domain resources except the target sub-band.

In a second aspect, embodiments of the present disclosure provide an information processing method, comprising:
transmitting, by a network device, first information to a terminal so that the terminal can determine whether transmission on candidate frequency domain resources is valid based on the first information;
wherein the terminal is configured with a target sub-band, and the transmission direction corresponding to the target sub-band differs from that of other frequency domain resources;
the candidate frequency domain resources include the target sub-band or other frequency domain resources.

Optionally, the first information is user-specific or user group-specific first information.

Optionally, the transmitting, by a network device, first information to a terminal includes:
if the first information is user-specific, the network device transmits the first information via RRC signaling or DCI.

Optionally, the transmitting, by a network device, first information to a terminal includes:
if the first information is user group-specific, the network device transmits the first information via a target DCI format.

Optionally, the target DCI format includes DCI Format 2_0;
wherein the RNTI of DCI Format 2_0 differs from the RNTI of DCI Format 2_0 used to indicate Slot Format Indication (SFI); or
the target DCI format is used to indicate the transmission direction of the first target time unit; or
the target DCI format includes indication information, which indicates whether the target DCI format is used to indicate transmission direction information in full-duplex mode.

Optionally, the first information further includes second information, which indicates the effective time of the first information.

The target sub-band is a resource in the available frequency domain resources for uplink or downlink transmission;
the other frequency domain resources are those available frequency domain resources except the target sub-band.

In the third aspect, embodiments of the present disclosure provide an information processing device, applied to a terminal, comprising: a memory, a transceiver, and a processor:
the memory is used for storing a computer program;
the transceiver is used for transmitting and receiving data under the control of the processor;
the processor is used for reading the computer program from the memory and performing the following operations:
receiving first information from network device;
determining whether transmission on candidate frequency domain resources is valid based on the first information;
wherein the terminal is configured with a target sub-band, and the transmission direction corresponding to the target sub-band differs from that of other frequency domain resources;
the candidate frequency domain resources include the target sub-band or the other frequency domain resources.

Optionally, the processor is further configured to read the computer program from the memory and perform the following operations:
determining the first transmission direction of a first target time unit based on the first information;
for candidate frequency domain resources within the first target time unit, if the transmission direction on the candidate frequency domain resources within the first target time unit is the same as the first transmission direction, determining that the transmission on the candidate frequency domain resources within the first target time unit is valid.

Optionally, the processor is further configured to read the computer program from the memory and perform the following operations:
for transmission on candidate frequency domain resources within the first target time unit, if the second transmission direction of the transmission does not conflict with the transmission direction of the candidate frequency domain resources, and the second transmission direction is the same as the first transmission direction, determining that the transmission is valid.

Optionally, the first information is user-specific or user group-specific first information.

Optionally, the processor is further configured to read the computer program from the memory and perform the following operations:
if the first information is user-specific, receiving the first information transmitted by the network device via RRC signaling or DCI.

Optionally, the processor is further configured to read the computer program from the memory and perform the following operations:
if the first information is user group-specific, receiving the first information transmitted by the network device via a target DCI format.

Optionally, the target DCI format includes DCI Format 2_0;
wherein the RNTI of DCI Format 2_0 differs from the RNTI of DCI Format 2_0 used to indicate SFI; or
the target DCI format is used to indicate the transmission direction of the first target time unit; or
the target DCI format includes indication information, which indicates whether the target DCI format is used to indicate transmission direction information in full-duplex mode.

Optionally, the processor is further configured to read the computer program from the memory and perform the following operations:
determining candidate frequency domain resource information in a second target time unit based on the first information;
determining the frequency domain resources of the terminal in the second target time unit based on the candidate frequency domain resource information;
determining that the transmission on the frequency domain resources in the second target time unit is valid.

Optionally, the processor is further configured to read the computer program from the memory and perform the following operations:
determining the effective time of the first information through one or more manners:
determining by the second information in the first information, where the second information indicates the effective time;
the effective time is a predefined time unit;
determining by the time the terminal detects the first information.

In a fourth aspect, embodiments of the present disclosure provide an information processing device, applied to network device, comprising: a memory, a transceiver, and a processor,
the memory is used for storing a computer program; the transceiver is used for transmitting and receiving data under the control of the processor; the processor is used for reading the computer program from the memory and performing the following operations: transmitting first information to a terminal so that the terminal can determine whether transmission on candidate frequency domain resources is valid based on the first information; wherein the terminal is configured with a target sub-band, and the transmission direction corresponding to the target sub-band differs from that of other frequency domain resources; the candidate frequency domain resources include the target sub-band or the other frequency domain resources.

Optionally, the first information is user-specific or user group-specific;
the processor is further configured to read the computer program from the memory and perform the following operations:
if the first information is user-specific, transmitting the first information via RRC signaling or DCI; or,
if the first information is user group-specific, transmitting the first information via a target DCI format.

Optionally, the target DCI format includes DCI Format 2_0;
wherein the RNTI of DCI Format 2_0 differs from the RNTI of DCI Format 2_0 used to indicate Slot Format Indication (SFI); or,
the target DCI format is used to indicate the transmission direction of the first target time unit; or,
the target DCI format includes indication information, which indicates whether the target DCI format is used to indicate transmission direction information in full-duplex mode.

Optionally, the first information further includes second information, which indicates the effective time of the first information.

In a fifth aspect, embodiments of the present disclosure provide an information processing device, applied to a terminal, comprising:
a first receiving unit, for receiving first information from network device;
a first determining unit, for determining whether transmission on candidate frequency domain resources is valid based on the first information;
wherein the terminal is configured with a target sub-band, and the transmission direction corresponding to the target sub-band differs from that of other frequency domain resources;
the candidate frequency domain resources include the target sub-band or the other frequency domain resources.

In a sixth aspect, embodiments of the present disclosure provide an information processing device, applied to network device, comprising:
a first transmitting unit, for transmitting first information to a terminal so that the terminal can determine whether transmission on candidate frequency domain resources is valid based on the first information;
wherein the terminal is configured with a target sub-band, and the transmission direction corresponding to the target sub-band differs from that of other frequency domain resources;
the candidate frequency domain resources include the target sub-band or the other frequency domain resources.

In a seventh aspect, embodiments of the present disclosure also provide a processor-readable storage medium on which a computer program is stored, wherein the computer program, when executed by the processor, implements the steps in the information processing methods described above.

According to the embodiments of the present disclosure, the terminal can determine whether the transmission on candidate frequency domain resources is valid based on the first information from the network device. Therefore, if there are transmission resources with different transmission directions at the same time, the terminal can determine on which resource to transmit or, if the network device schedules transmissions in different transmission directions simultaneously, the terminal can determine which transmission direction is valid, thereby improving the transmission performance of the terminal.

### BRIEF DESCRIPTION OF THE DRAWINGS

Figure 1 is one of the flowcharts of the information processing method according to an embodiment of the present disclosure;
Figure 2 is another flowchart of the information processing method according to an embodiment of the present disclosure;
Figure 3 is one of the transmission diagrams according to an embodiment of the present disclosure;
Figure 4 is another transmission diagram according to an embodiment of the present disclosure;
Figure 5 is yet another transmission diagram according to an embodiment of the present disclosure;
Figure 6 is a fourth transmission diagram according to an embodiment of the present disclosure;
Figure 7 is one of the structural diagrams of the information processing device according to an embodiment of the present disclosure;
Figure 8 is another structural diagram of the information processing device according to an embodiment of the present disclosure;
Figure 9 is yet another structural diagram of the information processing device according to an embodiment of the present disclosure;
Figure 10 is a fourth structural diagram of the information processing device according to an embodiment of the present disclosure.

### DETAILED DESCRIPTION

In the embodiments of the present disclosure, the term "and/or" describes a relationship between associated objects, indicating three possible relationships. For example, A and/or B can represent: A alone, both A and B, or B alone. The character "/" generally denotes an "or" relationship between the related objects.

In the embodiments of the present disclosure, the term "multiple" means two or more, similar to how other quantifiers are used.

Hereinafter, the technical solutions in the embodiments of the present disclosure will be described clearly and completely in conjunction with the accompanying drawings in the embodiments of the present disclosure. It is evident that the described embodiments are merely some of the embodiments of the present disclosure and not all of them. Based on the embodiments of the present disclosure, all other embodiments obtained by those skilled in the art without creative effort fall within the protection scope of the present disclosure.

The present disclosure provides an information processing method and device to improve the transmission performance of terminals. The method and device are based on the same inventive concept, and given their similar problem-solving principles, the implementations of the devices and methods can reference each other, with redundancies omitted.

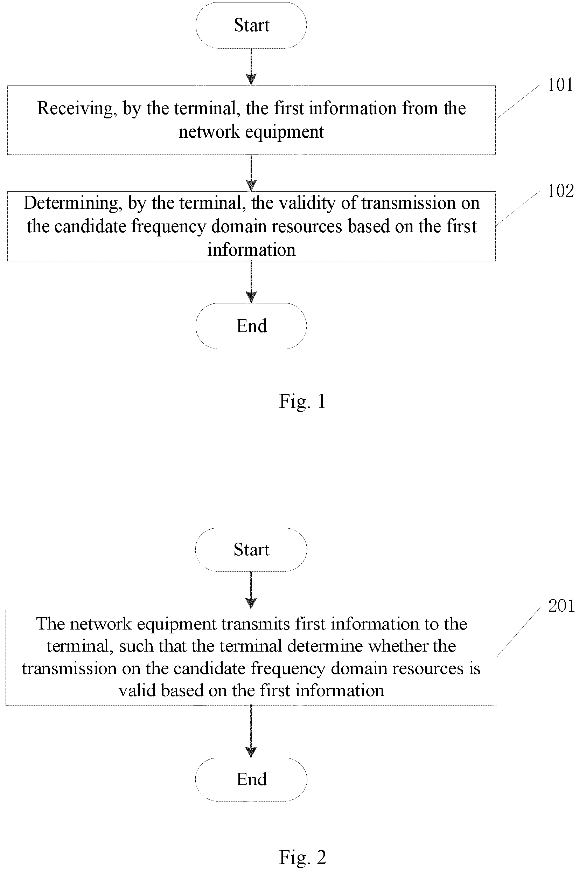

Refer to Figure 1, it is a flowchart of the information processing method according to an embodiment of the present disclosure. As shown in Figure 1, it includes the following steps:

Step 101: The terminal receives the first information from the network device.

In the embodiments of the present disclosure, the terminal can receive the first information transmitted by the network device through RRC signaling, DCI, or other means. This first information can be understood as including information indicating which transmission on certain resources is valid or can be understood as reference information determining which transmissions on certain resources are valid, such as transmission direction.

In practical application, the first information may be configuration information or indication information.

Step 102: The terminal determines whether transmission on candidate frequency domain resources is valid based on the first information.

Here, the terminal is configured with a target sub-band, where the transmission direction corresponding to the target sub-band differs from that of other frequency domain resources; the candidate frequency domain resources include the target sub-band or other frequency domain resources.

In embodiments of the present disclosure, the target sub-band is an available frequency domain resource used for uplink or downlink transmission; other frequency domain resources are those available frequency domain resources excluding the target sub-band. The available frequency domain resources might include band resources of Time Division Duplex (TDD), resources within a carrier, or resources within Bandwidth Part (BWP). The content included in available frequency domain resources can also be expanded as needed.

For example, in practical applications, the network device can allocate a portion of resources for exclusive use in uplink or downlink transmission on TDD band resources, within a carrier, or inside a BWP, etc. This part of resources is termed the target sub-band, with the remaining resources outside the target sub-band termed as other frequency domain resources. In other words, for terminals enhanced with full-duplex capabilities, the network device can configure specific sub-bands for uplink (or downlink) transmission.

In one way of implementing the present disclosure, the terminal determines the first transmission direction for the first target time unit based on the first information. If the transmission direction of candidate frequency domain resources within the first target time unit matches the first transmission direction, the terminal considers transmissions on those resources as valid. This first target time unit can be set as needed and could be symbols, slots, or sub-frames. Essentially, it involves determining the validity of transmissions on specific sub-bands/frequency domain resources based on a common transmission direction indicated by the first information within a certain time unit.

Specifically, for transmissions on candidate frequency domain resources within the first target time unit, if their second transmission direction does not conflict with the resources' transmission direction, and they match the first transmission direction, then it is determined to be valid.

That is, when a terminal is configured or scheduled on a particular sub-band or frequency domain resource for a transmission, and that direction doesn't conflict with the direction assigned to those resources, the terminal confirms that the first information's indicated direction aligns with the transmission's direction. If aligned, the transmission is valid; otherwise, it is invalid.

For instance, during a specific time unit, if a transmission is configured or scheduled on a certain sub-band or frequency domain resource while another is configured on different resources in differing directions that don't conflict with their respective resource directions, the terminal uses the first information to determine valid transmissions:

If the direction indicated by the first information matches the direction of the transmission configured or scheduled on a specific sub-band or frequency domain resource, that transmission is considered valid for the current time unit. Otherwise, another configured or scheduled transmission on other frequency domain resources is determined to be valid.

Simultaneously, in this manner, the first information is user-specific or user-group-specific. Accordingly, in Step 101, if the first information is user-specific, the terminal receives it via RRC signaling or DCI from the network device. If it is user-group-specific, the terminal receives it via a target DCI format from the network device. The target DCI format includes DCI Format 2_0 (DCI Format 2_0).

In other words, for user-specific scenarios, the network device can transmit the first information via RRC dedicated signaling or dynamically configure using DCI. For user-group-specific scenarios, network device could reuse DCI Format 2_0 to indicate the first information or utilize newly defined DCI formats for full-duplex indications.

When using a DCI format to indicate the first information, the RNTI of DCI Format 2_0 differs from that used for SFI in DCI Format 2_0. Alternatively, the target DCI format indicates the transmission direction of the first target time unit. Therefore, the target DCI format is reinterpreted for indicating the first information. Alternatively, this format includes indicative information showing whether it is used to indicate transmission direction information in a full-duplex mode.

Thus, the terminal can acquire the first information through the RNTI in DCI Format 2_0, determine the first information from the indicative information, or directly ascertain it from DCI Format 2_0.

It is worth mentioning that in this way, regarding symbols configured for downlink with RRC signaling, if the first information indicates a symbol as uplink, it doesn't imply uplink across all frequency domain resources but rather exclusively within the bounds of a specific sub-band intended for uplink. Conversely, if it indicates a symbol as downlink, it is restricted to a sub-band meant for downlink.

These approaches allow flexible indication of the first information, thereby improving the transmission performance and efficiency for terminals enhanced with full-duplex capabilities.

In another embodiment of the present disclosure, the terminal identifies candidate frequency domain resource information in a second target time unit based on the first information and, accordingly, determines frequency domain resources for the terminal in that unit. Subsequently, the terminal verifies the validity of the transmission on these frequency domain resources in the second target time unit. Essentially, this method enables the terminal to establish validity for transmissions within specified frequency domains in the second time unit. The second target time unit can be adjusted as necessary.

In the embodiments of the present disclosure, the first target time unit or the second target time unit includes but is not limited to frames, subframes, slots, or symbols.

The network device can indicate active transmission sub-bands for certain time units via first information. For example, if the network device signals that the frequency domain resources employed by the terminal during a particular time unit is a specific transmission sub-band, then transmissions are only deemed valid within that transmission sub-band in that time frame; otherwise, transmissions occur over other frequency domain resources.

Assuming multiple sub-bands exist in the frequency domain (two or more, preferably starting with two as a primary scenario, where any sub-band physically spans a continuous or discontinuous range), the network device can signify the efficacy of transmissions on a sub-band using DCI bits-for instance, 0 indicating a sub-band's valid transmission, 1 otherwise. Terminals then ascertain transmission validity on these sub-bands as per the DCI instructions.

In the embodiments of the present disclosure, to ensure transmission reliability, the terminal may also determine the effective time of the first information. That is, the terminal will only perform the corresponding processing based on the first information at this effective time.

Specifically, the terminal can determine this effective time through the following methods:
1. Via the second information in the first information, which points out the effective time. For instance, this may designate effective slots or symbols.
2. By predefined time units, such as protocol-defined offsets or segment lengths post reception of the first information.
3. Based on detection timing of the first information by the terminal. For example, upon notification through DCI, the terminal might deduce the current slot or slot n+k as effective time, where k (a positive integer) could be predetermined, communicated in the DCI, or configured semi-statically via RRC. The effective period length remains predefined unless overridden by subsequent notifications.

In the embodiments of the present disclosure, the terminal determines transmission validity of candidate frequency domain resources based on first information from network device. Therefore, if resources involving differing transmission directions exist at the same moment, the terminal can determine which resource to use for transmission. Alternatively, if the network device schedules transmissions in different directions simultaneously, the terminal can determine which transmission direction is valid, thereby improving the terminal's transmission performance.

Referring to Figure 2, which is a flowchart of the information processing method according to an embodiment of the present disclosure, comprises the following steps:

Step 201: Network device transmits first information to the terminal to facilitate the terminal in determining the validity of transmissions on candidate frequency domain resources.

Here, the terminal is configured with a target sub-band, whose transmission direction diverges from those of other frequency domain resources; these candidate frequency domain resources incorporate either the target sub-band or other frequency domain resources.

In the existing embodiments, the target sub-band pertains to the available frequency domain resources designated for either uplink or downlink transmission, differing from other frequency domain resources. Other frequency domain resources refer to the remaining available frequency domain resources that exclude the target sub-band. These could consist of band resources within TDD, carrier resources, or resources within a specific bandwidth part (BWP). Of course, the contents included in the available frequency domain resources can also be expanded according to actual needs.

In this step, the first information may be user-specific or user-group-specific. If the first information is user-specific, the network equipment transmits the first information via RRC signaling or DCI. If it is user-group-specific, the network equipment transmits the first information using a target DCI format.

The target DCI format includes DCI Format 2_0. For instance, the RNTI (Radio Network Temporary Identifier) of DCI Format 2_0 differs from that used for indicating slot format indication (SFI); or the target DCI format is used to indicate the transmission direction of the first target time unit; or the target DCI format includes indicator information that indicates whether the DCI format is used to signify transmission direction information in full-duplex mode.

Additionally, the first information includes second information that indicates when the first information comes into effect. The second information can be carried in a certain field or domain of the first information.

In the embodiment of the present disclosure, the terminal can determine the validity of transmissions on candidate frequency domain resources based on the first information from the network equipment. Therefore, if transmission resources with different directions exist at the same time, the terminal can determine which resource to use for transmission. Alternatively, if the network equipment schedules transmissions in different directions simultaneously, the terminal can discern which transmission direction is valid, thereby improving the terminal's transmission performance.

Hereinafter, the implementation process of the information processing method in an embodiment of the present disclosure is described in detail with specific embodiments. In the embodiment of the present disclosure, the description is given using a base station as an example for network equipment.

In one embodiment of the present disclosure, the base station indicates the transmission direction in a specific time unit through first information (such as configuration information or indication information). The terminal determines that transmissions on a specific sub-band/frequency domain resource are valid if its transmission direction matches that indicated by the configuration information or indication information.

The configuration or indication information can be user-specific or group-specific. For user-specific cases, a base station can either transmit this information via dedicated RRC signaling or employ DCI for dynamic configuration. For user-group-specific scenarios, DCI Format 2-0 can be reused, or new DCI formats aimed at full-duplex can be defined.

For a group-specific situations, slot format indication (SFI) can be reused for indicating such information.

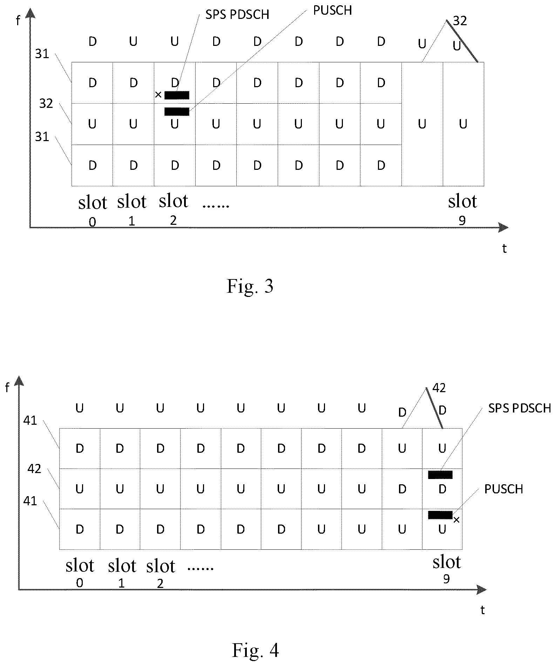

For example, as shown in Figure 3, where 31 (marked as D) represents downlink transmission resources and 32 (marked as U) represents uplink transmission resources, the base station can indicate via configuration information or indication information that the transmission direction of slot 1 and slot 2 is U (uplink). Optionally, further based on the configuration information or indication information, the UE determines whether transmissions on the uplink (UL) sub-band resources in slot 1 to slot 2 are valid. For instance, when the base station configures semi-persistent scheduling (SPS) physical downlink shared channel (PDSCH) transmission in the downlink transmission resources of slot 2, the SPS PDSCH transmission would be considered invalid because, although it doesn't conflict with the transmission direction of its resources, the configuration or indication information signifies slot 2 as uplink. Thus, the base station does not transmit signals to the terminal on SPS PDSCH resources, and the terminal will not receive them. When the base station schedules a physical uplink shared channel (PUSCH) transmission in the uplink transmission resources of slot 2, the terminal determines that since the transmission direction of the PUSCH is the same as that indicated by the configuration or indication information, the PUSCH transmission is considered valid, allowing the terminal to transmit data.

Also, as shown in Figure 4, where 41 (marked as D) represents downlink transmission resources and 42 (marked as U) represents uplink transmission resources, the base station configures slot 8 and slot 9 as downlink (D) through configuration or indication information, allowing downlink sub-band resources to be used from slot 8 to slot 9 for downlink transmission. When an SPS PDSCH transmission is configured by the base station within the downlink transmission resources of slot 9, the SPS PDSCH and its resources' transmission direction do not conflict, and the configuration or indication information signifies slot 9 as downlink, making the SPS PDSCH transmission valid. The base station transmits information to the terminal on SPS PDSCH resources, and the terminal receives it. However, if a PUSCH transmission is scheduled by the base station in the uplink transmission resources of slot 9, the terminal determines that since the PUSCH transmission direction differs from the configuration or indication information, the PUSCH transmission is deemed invalid, preventing the terminal from transmitting data in PUSCH.

In the present disclosure, UE-specific uplink and downlink configuration information might be sent via dedicated RRC signaling or configured dynamically using DCI.

The configuration or indication information may also be user-group-specific.

For instance, configuration or indication information could configure UE-group specific transmission directions based on DCI Format 2-0 and Slot Format Indication RNTI (SFI-RNTI). It should be noted that unlike prior art where SFI is used solely to indicate flexible symbol transmission directions, the SFI-RNTI in the present disclosure can redefine the transmission direction of any symbol.

Moreover, this configuration or indication information can also leverage DCI Format 2-0 and a newly defined RNTI specifically for full-duplex UE to set UE-group specific transmission directions. For example, a newly defined full duplex slot format indication RNTI (FD-SFI-RNTI). This new RNTI helps differentiate full-duplex mode from legacy modes. For instance, the configuration or indication information may further include DCI Format 2-0, introducing indicator information therein to denote whether the current DCI pertains to transmission direction information under full-duplex mode. Alternatively, for terminals configured for full-duplex transmission, interpreting conventional DCI format 2_0 differently reflects not just flexible symbol direction but also effective transmission on specific sub-bands in contrast to other frequency domain resources. It's important to note that in the present disclosure, the SFI can redefine the transmission direction of any symbol.

In an embodiment of the present disclosure, transmission sub-bands in specific time units are indicated by configuration or indication information, whereby the terminal determines the validity of transmission occurring within those sub-bands as indicated by the configuration or indication info.

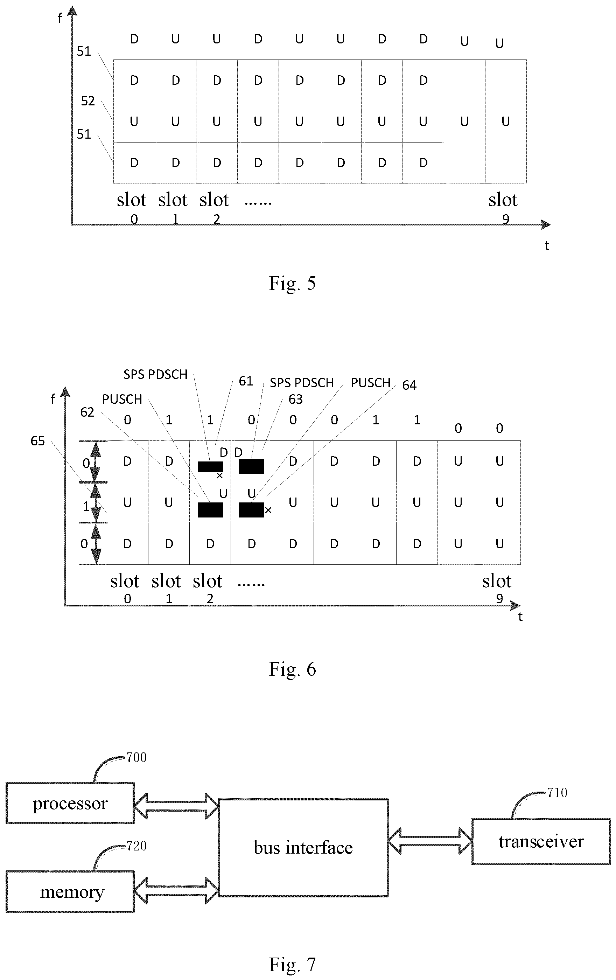

In this embodiment, the indication of transmission sub-band (resource information) indirectly signals the UE's transmission direction. As shown in Figure 5, where 51 (boxed as D) represents downlink transmission resources and 52 (boxed as U) represents uplink transmission resources, the base station configures the usable transmission sub-band pattern (transmission resource) per frame slot as DUUDUUDDUU to define valid transmission sub-bands for each slot in the UE. Optionally, the base station could also set each symbol's transmission sub-band within slots, defining valid sub-bands per symbol. Similarly, a mix of configurations per frame and slot informs UE's total valid sub-band assignments.

The configuration or indication information might be executed by specifying sub-band numbers, for example. Since there's a mapping between sub-band numbers and transmission directions, terminals derive their transmission direction based on these numbers and mappings. Alternatively, values like 0 and 1 may indicate the validity of UE transmissions per sub-band. Optionally, values like 0 and 1 may indicate whether transmission occurs on a specific sub-band.

As shown in Figure 6, the block marked with D represent downlink transmission resources, and the block marked with U represent uplink transmission resources. For slots 1/2/6/7, a 1 is indicated in the configuration or indication information, meaning the UE uses the resources indicated by line 65 marked as 1, thus setting the transmission direction of the UE to U (uplink). When the base station configures SPS PDSCH transmission in the resources indicated by 61 in slot 2 (downlink transmission resources), even though the transmission direction of the SPS PDSCH does not conflict with the resource's transmission direction, the configuration or indication information indicates that the resources denoted by 62 in slot 2 (uplink transmission resources) are valid. Therefore, the SPS PDSCH is considered an invalid transmission, and the base station will not transmit new signals on the SPS PDSCH resources, nor will the terminal receive them. When the base station configures the SPS PDSCH transmission in the resources indicated by 63 in slot 3 (showing downlink transmission resources), since the configuration or indication information specifies the sub-band indicating downlink transmission resources as valid for slot 3, the SPS PDSCH is a valid transmission. The base station transmits on the SPS PDSCH resources, and the terminal receives it. When the base station schedules a PUSCH transmission in the resources indicated by 62 in slot 2, the terminal judges that this sub-band belongs to those indicated by the configuration or indication information and considers the PUSCH transmission valid, allowing data to be sent. However, when a PUSCH transmission is scheduled on the resources indicated by 64 in slot 3 (representing uplink transmission resources), the terminal determines that this sub-band does not belong to those indicated by the configuration or indication information, deeming the PUSCH transmission invalid, hence no data is sent.

Optionally, 0 and 1 can indicate whether the UE transmits on a specific sub-band. For example, the specific sub-band could be the uplink sub-band indicated by 65 in Figure 6, where 1 indicates that the UE transmits on this uplink sub-band and 0 indicates that the UE does not transmit on this uplink.

The configuration or indication information can be semi-statically configured via RRC or dynamically configured in DCI.

In the above embodiments, the time units during which the configuration or indication information takes effect can be indicated within that configuration or indication information.

For instance, it might specify the effective slot/symbol. Alternatively, the time unit can be predefined, such as by protocol agreements prescribing that this configuration or indication information configures cell-specific downlink/uplink time unit transmission directions. Additionally, this configuration or indication information may indicate transmission directions for each slot/symbol within a cell-specific uplink/downlink configuration period.

Furthermore, the effective time unit for configuration or indication information dynamically notified through DCI can also be indirectly determined based on when the UE detects this configuration or indication information. For example, when DCI dynamically communicates the UE's uplink/downlink transmission direction, the UE might determine the effective time as the current slot n or slot n+k upon detecting this DCI in slot n. Here, k (an integer greater than 0) could be predefined, notified within the DCI, or set via RRC semi-static configuration.

In this disclosed embodiment, the configuration or indication information provides flexibility in determining the UE's transmission direction.

As described, in this disclosed embodiment, for full-duplex terminals, when the transmission direction on a configured specific sub-band differs from that indicated by traditional TDD configuration information, the use of explicit configuration/indication information ensures the correct transmission direction/resource, thereby guaranteeing the transmission performance of full-duplex terminals.

The solution provided by the embodiments of the present disclosure may be applicable to multiple kinds of systems, especially a 5^{th} generation (5G) system. For example, an applicable system may be a global system of mobile communication (GSM) system, a code division multiple access (CDMA) system, a wideband code division multiple access (WCDMA) system, a general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS) system, a worldwide interoperability for microwave access (WiMAX) system, a 5G New Radio (NR) system, or the like. All of the multiple kinds of systems include a terminal and a network device. The systems may include a core network portion as well, for example, evolved packet system (EPS), 5G system (5GS/5GC) or the like.

The terminal involved in the embodiments of the present disclosure is a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as UE. A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, a Personal Digital Assistant (PDA), a Reduced Capability (Redcap) terminal, a smart appliance terminal, a vehicle-mounted terminal or a robot. In addition, the wireless terminal device may also be called as system, subscriber unit, subscriber station, mobile station, mobile, remote station, remote terminal, access terminal, user terminal, user agent or user device, which will not be particularly defined herein.

The network device involved in the embodiments of the present application may be a base station, and the base station may have multiple cells providing services for terminals. According to different application scenarios, the base station may also be referred to as an access point, or may be a device in an access network that communicates with wireless terminals through one or more sectors on air interfaces, or may have other names. The network device may be configured to exchange received air frames and Internet protocol (Internet Protocol, IP) packets, serving as a router between the wireless terminals and rest of the access network, where the rest of the access network may include an Internet Protocol (IP) communication network. The network device may also coordinate attribute management of air interfaces. For example, the network device involved in the embodiments of this application may be a network device(Base Transceiver Station, BTS) in a global system for mobile communications (Global System for Mobile Communications, GSM) or a code division multiple access (Code Division Multiple Access, CDMA), or may be a network device (NodeB) in wide-band code division multiple access (Wide-band Code Division Multiple Access, WCDMA), or may be an evolutional network device (evolutional Node B, eNB or e-NodeB) in a long term evolution (Long Term Evolution, LTE) system or a 5G base station (gNB) in a 5G network architecture (next generation system), or may be a home evolved node B (Home evolved Node B, HeNB),a relay node (relay node), a femto (femto), a pico (pico), etc., which is not limited in the embodiments of this application. In some network structures, the network device may include a centralized unit (centralized unit, CU) node and a distributed unit (distributed unit, DU) node, and the centralized unit and the distributed unit may be geographically separated.

Multi Input Multi Output (MIMO) transmission is performed between the satellite and the terminal each with one or more antennae, and the MIMO transmission is Single User MIMO (SU-MIMO) or Multiple User MIMO (MU-MIMO). Depending on the form of an antenna combination and the quantity of antennae, the MIMO transmission may be two-dimensional MIMO (2D-MIMO), three-dimensional MIMO (3D-MIMO), Full Dimension MIMO (FD-MIMO) or massive-MIMO, and it may also be diversity transmission, precoding transmission or beam-forming transmission.

As shown in Fig. 7, embodiments of the present disclosure further provide an information processing device, applied to network device, comprising: a processor 700 used for reading the computer program from the memory 720 and performing the following steps:

transmitting first information to a terminal so that the terminal can determine whether transmission on candidate frequency domain resources is valid based on the first information;

wherein the terminal is configured with a target sub-band, and the transmission direction corresponding to the target sub-band differs from that of other frequency domain resources;

the candidate frequency domain resources include the target sub-band or the other frequency domain resources.

The transceiver 710 is configured to transmit and receive data under the control of the processor 700.

In Fig. 7, a bus architecture may include any number of interconnected buses and bridges, and connects various circuits including one or more processors represented by the processor 700 and memory represented by the memory 720. The bus architecture may also connect various other circuits such as peripherals, voltage regulators and power management circuits, which is well known in the art. Therefore, a detailed description thereof is omitted herein. A bus interface provides an interface. The transceiver 710 may be multiple elements, i.e., a transmitter and a receiver, to allow for communication with various other apparatuses on the transmission medium. These transmission media include wireless channel, wired channel, optic fiber or the like. The processor 700 is responsible for supervising the bus architecture and normal operation and the memory 720 may store the data being used by the processor 700 during operation.

Optionally, the processor 700 may be a central processing unit (CPU), an application specific integrated circuit (ASIC), a field-programmable gate array (FPGA) or a complex programmable logic device (CPLD). The processor may also adopt a multi-core architecture.

The processor 700 is responsible for managing the bus architecture and general processing, while the memory 720 can store data used by the processor 700 during operations.

In embodiments of the present disclosure, the target sub-band is an available frequency domain resource used for uplink or downlink transmission; other frequency domain resources are those available frequency domain resources excluding the target sub-band. The available frequency domain resources might include band resources of Time Division Duplex (TDD), resources within a carrier, or resources within Bandwidth Part (BWP). The content included in available frequency domain resources can also be expanded as needed.

Optionally, the first information is user-specific or user group-specific;
the processor 700 is further configured to read the computer program from the memory and perform the following operations:
if the first information is user-specific, transmitting the first information via RRC signaling or DCI; or,
if the first information is user group-specific, transmitting the first information via a target DCI format.

Optionally, the target DCI format includes DCI Format 2_0;
wherein the RNTI of DCI Format 2_0 differs from the RNTI of DCI Format 2_0 used to indicate Slot Format Indication (SFI); or,
the target DCI format is used to indicate the transmission direction of the first target time unit; or,
the target DCI format includes indication information, which indicates whether the target DCI format is used to indicate transmission direction information in full-duplex mode.

Optionally, the first information further includes a second information, which indicates the effective time of the first information.

It should be noted here that the above-mentioned terminal provided by the embodiments of the present disclosure can implement all the method steps implemented by the above-mentioned embodiment of the method performed by the terminal, and can achieve the same technical effect. Parts and beneficial effects in this embodiment that are the same as those in the method embodiment will not be described in detail here.

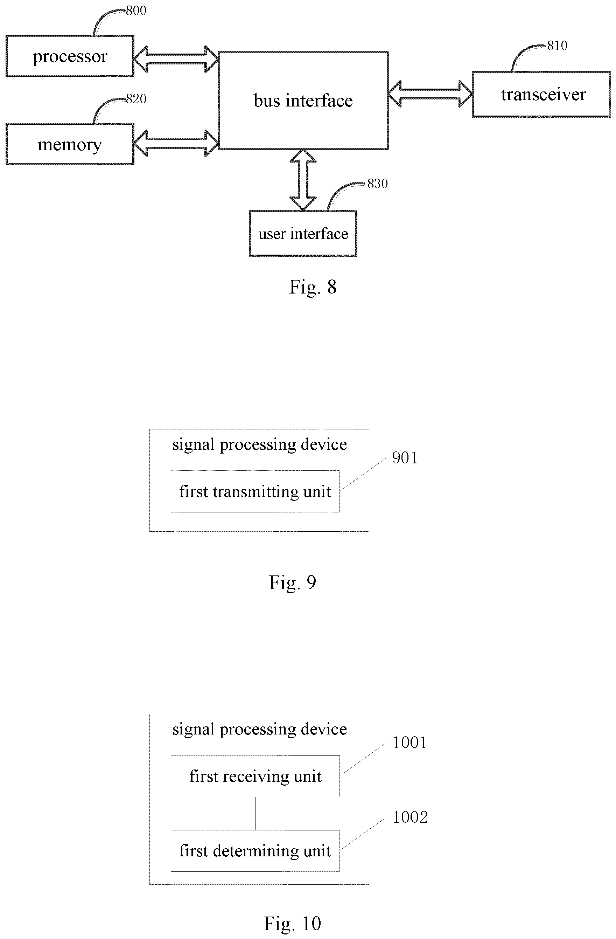

As shown in Fig. 8, embodiments of the present disclosure provide an information processing device, applied to a terminal, comprising:
a processor 800 used for reading the computer program from the memory 820 and performing the following operations:
receiving first information from network device;
determining whether transmission on candidate frequency domain resources is valid based on the first information;
wherein the terminal is configured with a target sub-band, and the transmission direction corresponding to the target sub-band differs from that of other frequency domain resources;
the candidate frequency domain resources include the target sub-band or the other frequency domain resources.

The transceiver 810 is used for transmitting and receiving data under the control of the processor 800.

In Fig. 8, a bus architecture may include any number of interconnected buses and bridges, and connects various circuits including one or more processors represented by the processor 800 and memory represented by the memory 820. The bus architecture may also connect various other circuits such as peripherals, voltage regulators and power management circuits, which is well known in the art. Therefore, a detailed description thereof is omitted herein. A bus interface provides an interface. The transceiver 810 may be multiple elements, i.e., a transmitter and a receiver, to allow for communication with various other apparatuses on the transmission medium. These transmission media include wireless channel, wired channel, optic fiber or the like. For different user equipment, the user interface 830 may be an interface capable of externally or internally connecting a required device, and the connected device includes, but is not limited to: a keypad, a display, a speaker, a microphone, a joystick and the like.

The processor 800 is responsible for supervising the bus architecture and normal operation and the memory 820 may store the data being used by the processor 800 during operation.

Optionally, the processor 800 may be a central processing unit (CPU), an application specific integrated circuit (ASIC), a field-programmable gate array (FPGA) or a complex programmable logic device (CPLD). The processor may also adopt a multi-core architecture.

The processor invokes a computer program stored in the memory and implements any one method provided in the embodiments of the present disclosure according to the obtained executable instructions. The processor and the memory may also be arranged physically separately.

In embodiments of the present disclosure, the target sub-band is an available frequency domain resource used for uplink or downlink transmission; other frequency domain resources are those available frequency domain resources excluding the target sub-band. The available frequency domain resources might include band resources of Time Division Duplex (TDD), resources within a carrier, or resources within Bandwidth Part (BWP). The content included in available frequency domain resources can also be expanded as needed.

Optionally, the processor 800 is further configured to read the computer program from the memory and perform the following operations:
determining the first transmission direction of a first target time unit based on the first information;
for candidate frequency domain resources within the first target time unit, if the transmission direction on the candidate frequency domain resources within the first target time unit is the same as the first transmission direction, determining that the transmission on the candidate frequency domain resources within the first target time unit is valid.

Optionally, the processor 800 is further configured to read the computer program from the memory and perform the following operations:
for transmission on candidate frequency domain resources within the first target time unit, if the second transmission direction of the transmission does not conflict with the transmission direction of the candidate frequency domain resources, and the second transmission direction is the same as the first transmission direction, determining that the transmission is valid.

Optionally, the first information is user-specific or user group-specific first information.

Optionally, the processor is further configured to read the computer program from the memory and perform the following operations:
if the first information is user-specific, receiving the first information transmitted by the network device via RRC signaling or DCI.

Optionally, the processor 800 is further configured to read the computer program from the memory and perform the following operations:
if the first information is user group-specific, receiving the first information transmitted by the network device via a target DCI format.

Optionally, the target DCI format includes DCI Format 2_0;
wherein the RNTI of DCI Format 2_0 differs from the RNTI of DCI Format 2_0 used to indicate SFI; or
the target DCI format is used to indicate the transmission direction of the first target time unit; or
the target DCI format includes indication information, which indicates whether the target DCI format is used to indicate transmission direction information in full-duplex mode.

Optionally, the processor 800 is further configured to read the computer program from the memory and perform the following operations:
determining candidate frequency domain resource information in a second target time unit based on the first information;
determining the frequency domain resources of the terminal in the second target time unit based on the candidate frequency domain resource information;
determining that the transmission on the frequency domain resources in the second target time unit is valid.

Optionally, the processor 800 is further configured to read the computer program from the memory and perform the following operations:
determining the effective time of the first information through one or more of the following manners:
determining by the second information in the first information, where the second information indicates the effective time;
the effective time is a predefined time unit;
determining by the time the terminal detects the first information.

It should be noted here that the above-mentioned terminal provided by the embodiments of the present disclosure can implement all the method steps implemented by the above-mentioned embodiment of the method performed by the terminal, and can achieve the same technical effect. Parts and beneficial effects in this embodiment that are the same as those in the method embodiment will not be described in detail here.

As shown in Fig. 9, embodiments of the present disclosure provide an information processing device, applied to network device, comprising:
a first transmitting unit 901, for transmitting first information to a terminal so that the terminal can determine whether transmission on candidate frequency domain resources is valid based on the first information;
wherein the terminal is configured with a target sub-band, and the transmission direction corresponding to the target sub-band differs from that of other frequency domain resources;
the candidate frequency domain resources include the target sub-band or the other frequency domain resources.

In embodiments of the present disclosure, the target sub-band is an available frequency domain resource used for uplink or downlink transmission; other frequency domain resources are those available frequency domain resources excluding the target sub-band. The available frequency domain resources might include band resources of Time Division Duplex (TDD), resources within a carrier, or resources within Bandwidth Part (BWP). The content included in available frequency domain resources can also be expanded as needed.

Optionally, the first information is user-specific or user group-specific;
if the first information is user-specific, the network device transmits the first information via RRC signaling or DCI; or,
if the first information is user group-specific, the network device transmits the first information via a target DCI format.

Optionally, the target DCI format includes DCI Format 2_0;
wherein the RNTI of DCI Format 2_0 differs from the RNTI of DCI Format 2_0 used to indicate Slot Format Indication (SFI); or,
the target DCI format is used to indicate the transmission direction of the first target time unit; or,
the target DCI format includes indication information, which indicates whether the target DCI format is used to indicate transmission direction information in full-duplex mode.

Optionally, the first information further includes a second information, which indicates the effective time of the first information.

It should be noted here that the above-mentioned terminal provided by the embodiments of the present disclosure can implement all the method steps implemented by the above-mentioned embodiment of the method performed by the terminal, and can achieve the same technical effect. Parts and beneficial effects in this embodiment that are the same as those in the method embodiment will not be described in detail here.

As shown in Fig. 10, embodiments of the present disclosure provide an information processing device, applied to a terminal, comprising:
a first receiving unit 1001, for receiving first information from network device;
a first determining unit 1002, for determining whether transmission on candidate frequency domain resources is valid based on the first information;
wherein the terminal is configured with a target sub-band, and the transmission direction corresponding to the target sub-band differs from that of other frequency domain resources;
the candidate frequency domain resources include the target sub-band or the other frequency domain resources.

In embodiments of the present disclosure, the target sub-band is an available frequency domain resource used for uplink or downlink transmission; other frequency domain resources are those available frequency domain resources excluding the target sub-band. The available frequency domain resources might include band resources of Time Division Duplex (TDD), resources within a carrier, or resources within Bandwidth Part (BWP). The content included in available frequency domain resources can also be expanded as needed.

Optionally, the first determining unit comprises:
a first determining subunit, configured to determine the first transmission direction of a first target time unit based on the first information;
a second determining subunit, configured to determine, for candidate frequency domain resources within the first target time unit, if the transmission direction on the candidate frequency domain resources within the first target time unit is the same as the first transmission direction, that the transmission on the candidate frequency domain resources within the first target time unit is valid.

Optionally, the second determining subunit is further configured to determine, for transmission on candidate frequency domain resources within the first target time unit, if the second transmission direction of the transmission does not conflict with the transmission direction of the candidate frequency domain resources, and the second transmission direction is the same as the first transmission direction, that the transmission is valid.

Optionally, the first information is user-specific or user group-specific first information.

Optionally, the first receiving unit is further configured for:
if the first information is user-specific, receiving the first information transmitted by the network device via RRC signaling or DCI.

Optionally, the first receiving unit is further configured for:
if the first information is user group-specific, receiving the first information transmitted by the network device via a target DCI format.

Optionally, the target DCI format includes DCI Format 2_0;
wherein the RNTI of DCI Format 2_0 differs from the RNTI of DCI Format 2_0 used to indicate SFI; or
the target DCI format is used to indicate the transmission direction of the first target time unit; or
the target DCI format includes indication information, which indicates whether the target DCI format is used to indicate transmission direction information in full-duplex mode.

Optionally, the first determining unit includes:
a first determining subunit for determining candidate frequency domain resource information in a second target time unit based on the first information;
a second determining subunit for determining the frequency domain resources of the terminal in the second target time unit based on the candidate frequency domain resource information;
a third determining subunit for determining that the transmission on the frequency domain resources in the second target time unit is valid.

Optionally, the device further includes:
a second determining unit for determining the effective time of the first information through one or more of the following manners:
determining by the second information in the first information, where the second information indicates the effective time;
the effective time is a predefined time unit;
determining by the time the terminal detects the first information.

It should be noted here that the above-mentioned terminal provided by the embodiments of the present disclosure can implement all the method steps implemented by the above-mentioned embodiment of the method performed by the terminal, and can achieve the same technical effect. Parts and beneficial effects in this embodiment that are the same as those in the method embodiment will not be described in detail here.

It should be noted that the division of units in the embodiments of the present disclosure is illustrative, and is only a logical function division, and there may be another division method in actual implementation. In addition, the functional units in various embodiments of the present disclosure may be integrated into one processing unit, or each unit may exist separately physically, or two or more units may be integrated into one unit. The above-mentioned integrated units can be implemented in the form of hardware or in the form of software functional units.

If the integrated unit is implemented in the form of a software function unit and sold or used as an independent product, it can be stored in a processor-readable storage medium. Based on such an understanding, essential parts, or parts contributing to the related art, of the technical solution of the present disclosure, or all or a part of the technical solution may be implemented in a form of a software product. The computer software product is stored in a storage medium, and includes several instructions to enable a computer device (which may be a personal computer, a server, or a network device, etc.) or a processor to execute all or part of the steps of the methods described in the various embodiments of the present disclosure. The aforementioned storage media include: a universal serial bus (USB) flash drive, removable hard disk, read-only memory (ROM), random access memory (RAM), magnetic disk, optical disc or other media that can store program codes.

An embodiment of the present disclosure further provides a processor readable storage medium storing a computer program, wherein the computer program is configured to be executed by a processor, to implement the aforementioned positioning method. The processor readable storage medium may be any available medium or data storage device that can be accessed by the processor, including but not limited to magnetic storage (such as floppy disk, hard disk, magnetic tape, magneto-optical disk (MO)), optical storage (such as compact disc (CD), digital versatile disc (DVD), blue-ray disc (BD), holographic versatile disc (HVD)), and semiconductor memory (such as ROM, erasable programmable ROM (EPROM), electrically erasable programmable ROM (EEPROM), non-volatile memory (NAND FLASH), solid-state drive (SSD)), etc.

It should be noted that the terms "comprises," "includes," or any other variants thereof as used herein are intended to cover a non-exclusive inclusion, so that a process, method, article, or device that comprises a list of elements does not include only those elements but may also include other elements not expressly listed, or elements inherent to such a process, method, article, or device. Without further constraints, an element defined by the phrase "comprises a ..." does not exclude the presence of additional identical elements in the process, method, article, or device that comprises the element.

From the above description of the embodiments, those skilled in the art can clearly understand that the methods described in the aforementioned embodiments can be implemented by means of software in conjunction with necessary general hardware platforms. Of course, these methods can also be implemented through hardware, but in many cases, the former is a better implementation choice. With such an understanding, the essence of the technical solutions disclosed herein, or the part that contributes to the related technology, can be embodied in the form of a software product. This computer software product is stored on a storage medium (such as ROM/RAM, disk, optical disk), and includes several instructions for enabling a terminal (which can be a mobile phone, computer, server, air conditioner, or network device, etc.) to execute the methods described in various embodiments of this disclosure.

It should be further appreciated that, the above modules in the network device and the UE are divided merely on the basis of their logic functions, and in actual use, they may be completely or partially integrated into a physical entity, or physically separated from each other. These modules may be implemented by calling software through a processing element, or implemented in the form of hardware. For example, the determination module may be a processing element arranged separately, or integrated into a chip of the above-mentioned device. In addition, the determination module may be stored in the memory of the above-mentioned device in the form of a program code, and may be called and executed by a processing element of the above-mentioned device so as to achieve the above functions. The other modules may be implemented in a similar manner. All or parts of the modules may be integrated together or arranged separately. Here, the modules, units or assemblies may each of an Integrated Circuit (IC) having a signal processing capability. During the implementation, the steps of the method or the modules may be implemented through an integrated logic circuit of the processing element in the form of hardware or through instructions in the form of software.

For example, the above modules, units, sub-units or sub-modules may be one or more ICs capable of implementing the above-mentioned method, e.g., one or more Application Specific Integrated Circuits (ASICs), one or more Digital Signal Processors (DSPs), or one or more Field Programmable Gate Array (FPGA). For another example, when a certain module is implemented by calling a program code through a processing element, the processing element may be a general-purpose processor, e.g., a Central Processing Unit (CPU) or any other processor capable of calling the program code. These modules may be integrated together and implemented in the form of system-on-a-chip (SOC).

Such words as "first" and "second" involved in the specification and the appended claims are merely used to differentiate different objects rather than to represent any specific order. It should be appreciated that, the data used in this way may be replaced with each other, so as to implement the embodiments in an order other than that shown in the drawings or described in the specification. In addition, such terms as "include" or "including" or any other variations involved in the present disclosure intend to provide non-exclusive coverage, so that a procedure, method, system, product or device including a series of steps or units may also include any other elements not listed herein, or may include any inherent steps or units of the procedure, method, system, product or device. The expression "and/or" in the description and the appended claims is merely used to represent at least one of the objects before and after the expression. For example, "A and/or B and/or C" represents seven situations, i.e., there is only A, there is only B, there is only C, there are both A and B, there are both B and C, there are both A and C, and there are A, B and C. Similarly, the phrase "at least one of A or B" in the specification and the appended claims shall be understood as "there is only A, there is only B, or there are both A and B".

The above embodiments are for illustrative purposes only, but the present disclosure is not limited thereto. Obviously, a person skilled in the art may make further modifications and improvements without departing from the spirit of the present disclosure, and these modifications and improvements shall also fall within the scope of the present disclosure.

## Claims

1. An information processing method, comprising:
receiving, by a terminal, first information from network device;
determining, by the terminal, whether the transmission on candidate frequency domain resources is valid based on the first information;
wherein the terminal is configured with a target sub-band, the transmission direction corresponding to the target sub-band differs from other frequency domain resources;
the candidate frequency domain resources include the target sub-band or other frequency domain resources.

2. The information processing method according to claim 1, wherein the determining, by the terminal, whether transmission on candidate frequency domain resources is valid based on the first information comprises:
determining, by the terminal, the first transmission direction of a first target time unit based on the first information;
for the candidate frequency domain resources within the first target time unit, if the transmission direction on the candidate frequency domain resources within the first target time unit is the same as the first transmission direction, determining, by the terminal, that the transmission on the candidate frequency domain resources within the first target time unit is valid.

3. The information processing method according to claim 2, wherein the determining, by the terminal, that the transmission on the candidate frequency domain resources within the first target time unit is valid comprises:
for the transmission on the candidate frequency domain resources within the first target time unit, if the second transmission direction of the transmission does not conflict with the transmission direction of the candidate frequency domain resources, and the second transmission direction is the same as the first transmission direction, determining, by the terminal, the transmission is valid.

4. The information processing method according to claim 2 or 3, wherein the first information is user-specific first information, or the first information is user group-specific first information.

5. The information processing method according to claim 4, wherein if the first information is user-specific first information, receiving, by the terminal, first information from network device comprises:
receiving, by the terminal, the first information transmitted by the network device via Radio Resource Control (RRC) signaling or Downlink Control Information (DCI).

6. The information processing method according to claim 5, wherein if the first information is user group-specific first information, receiving, by the terminal, first information from network device comprises:
receiving, by the terminal, the first information transmitted by the network device via a target DCI format.

7. The information processing method according to claim 6, wherein the target DCI format comprises DCI Format 2_0;
wherein the Radio Network Temporary Identifier (RNTI) of the DCI Format 2_0 differs from the RNTI of the DCI Format 2_0 used to indicate Slot Format Indication (SFI); or
the target DCI format is used to indicate the transmission direction of the first target time unit; or
the target DCI format comprises indication information, which indicates whether the target DCI format is used to indicate transmission direction information in full-duplex mode.

8. The information processing method according to claim 1, wherein the determining, by the terminal, whether transmission on candidate frequency domain resources is valid based on the first information comprises:
determining, by the terminal, candidate frequency domain resource information in a second target time unit based on the first information;
determining, by the terminal, the frequency domain resources of the terminal in the second target time unit based on the candidate frequency domain resource information;
determining, by the terminal, that the transmission on the frequency domain resources in the second target time unit is valid.

9. The information processing method according to claim 1, wherein the determining, by the terminal, the effective time of the first information through one or more manners comprises:
determining the effective time by the second information in the first information, where the second information indicates the effective time;
the effective time is a predefined time unit;
determining by the time the terminal detects the first information.

10. The information processing method according to claim 1, wherein the target sub-band is a resource in the available frequency domain resources for uplink or downlink transmission;
the other frequency domain resources are those available frequency domain resources except the target sub-band.

11. An information processing method, comprising:
transmitting, by a network device, first information to a terminal so that the terminal can determine whether transmission on candidate frequency domain resources is valid based on the first information;
wherein the terminal is configured with a target sub-band, and the transmission direction corresponding to the target sub-band differs from that of other frequency domain resources;
the candidate frequency domain resources comprise the target sub-band or other frequency domain resources.

12. The information processing method according to claim 11, wherein the first information is user-specific or user group-specific first information.

13. The information processing method according to claim 12, wherein the transmitting, by a network device, first information to a terminal comprises:
if the first information is user-specific, the network device transmits the first information via RRC signaling or DCI.

14. The information processing method according to claim 12, wherein the transmitting, by a network device, first information to a terminal comprises:
if the first information is user group-specific, the network device transmits the first information via a target DCI format.

15. The information processing method according to claim 14, wherein the target DCI format includes DCI Format 2_0;
wherein the RNTI of DCI Format 2_0 differs from the RNTI of DCI Format 2_0 used to indicate Slot Format Indication (SFI); or
the target DCI format is used to indicate the transmission direction of the first target time unit; or
the target DCI format comprises indication information, which indicates whether the target DCI format is used to indicate transmission direction information in full-duplex mode.

16. The information processing method according to claim 11, wherein the first information further includes second information, which indicates the effective time of the first information.

17. The information processing method according to claim 11, wherein the target sub-band is a resource in the available frequency domain resources for uplink or downlink transmission;
the other frequency domain resources are those available frequency domain resources except the target sub-band.

18. An information processing device, applied to a terminal, comprising a memory, a transceiver and a processor, wherein
the memory is configured to store a computer program, the transceiver is configured to transmit and receive data under the control of the processor, and the processor is configured to read the computer program in the memory to implement following steps:
receiving first information from network device;
determining whether transmission on candidate frequency domain resources is valid based on the first information;
wherein the terminal is configured with a target sub-band, and the transmission direction corresponding to the target sub-band differs from that of other frequency domain resources;
the candidate frequency domain resources include the target sub-band or the other frequency domain resources.

19. The device according to claim 18, wherein the processor is further configured to read the computer program in the memory to implement:
determining the first transmission direction of a first target time unit based on the first information;
for candidate frequency domain resources within the first target time unit, if the transmission direction on the candidate frequency domain resources within the first target time unit is the same as the first transmission direction, determining that the transmission on the candidate frequency domain resources within the first target time unit is valid.

20. The device according to claim 19, wherein the processor is further configured to read the computer program in the memory to implement:
for transmission on candidate frequency domain resources within the first target time unit, if the second transmission direction of the transmission does not conflict with the transmission direction of the candidate frequency domain resources, and the second transmission direction is the same as the first transmission direction, determining that the transmission is valid.

21. The device according to claim 19 or 20, wherein the first information is user-specific or user group-specific first information.

22. The device according to claim 21, wherein the processor is further configured to read the computer program in the memory to implement:
if the first information is user-specific, receiving the first information transmitted by the network device via RRC signaling or DCI.

23. The device according to claim 22, wherein the processor is further configured to read the computer program in the memory to implement:
if the first information is user group-specific, receiving the first information sent by the network device via a target DCI format.

24. The device according to claim 23, wherein the target DCI format comprises DCI Format 2_0;
wherein the RNTI of DCI Format 2_0 differs from the RNTI of DCI Format 2_0 used to indicate SFI; or
the target DCI format is used to indicate the transmission direction of the first target time unit; or
the target DCI format comprises indication information, which indicates whether the target DCI format is used to indicate transmission direction information in full-duplex mode.

25. The device according to claim 18, wherein the processor is further configured to read the computer program in the memory to implement:
determining candidate frequency domain resource information in a second target time unit based on the first information;
determining the terminal's frequency domain resources in the second target time unit based on the candidate frequency domain resource information;
determining that the transmission on the frequency domain resources in the second target time unit is valid.

26. The device according to claim 18, wherein the processor is further configured to read the computer program in the memory to implement:
determining the effective time of the first information through one or more manners:
determining by the second information in the first information, where the second information indicates the effective time;
the effective time is a predefined time unit;
determining by the time the terminal detects the first information.

27. An information processing device, applied to network device, comprising: a memory, a transceiver, and a processor,
the memory is used for storing a computer program; the transceiver is used for transmitting and receiving data under the control of the processor; the processor is used for reading the computer program from the memory and performing the following steps:
transmitting first information to a terminal so that the terminal can determine whether transmission on candidate frequency domain resources is valid based on the first information;
wherein the terminal is configured with a target sub-band, and the transmission direction corresponding to the target sub-band differs from that of other frequency domain resources;
the candidate frequency domain resources include the target sub-band or the other frequency domain resources.

28. The device according to claim 27, wherein the first information is user-specific or user group-specific;
the processor is further configured to read the computer program from the memory and perform the following steps:
if the first information is user-specific, transmitting the first information via RRC signaling or DCI; or,
if the first information is user group-specific, transmitting the first information via a target DCI format.

29. The device according to claim 28, wherein the target DCI format comprises DCI Format 2_0;
wherein the RNTI of DCI Format 2_0 differs from the RNTI of DCI Format 2_0 used to indicate Slot Format Indication (SFI); or,
the target DCI format is used to indicate the transmission direction of the first target time unit; or,
the target DCI format comprises indication information, which indicates whether the target DCI format is used to indicate transmission direction information in full-duplex mode.

30. The device according to claim 27, wherein the first information further includes second information, which indicates the effective time of the first information.

31. An information processing device, applied to a terminal, comprising:
a first receiving unit, for receiving first information from network device;
a first determining unit, for determining whether transmission on candidate frequency domain resources is valid based on the first information;
wherein the terminal is configured with a target sub-band, and the transmission direction corresponding to the target sub-band differs from that of other frequency domain resources;
the candidate frequency domain resources include the target sub-band or the other frequency domain resources.

32. An information processing device, applied to network device, comprising:
a first transmitting unit, for transmitting first information to a terminal so that the terminal can determine whether transmission on candidate frequency domain resources is valid based on the first information;
wherein the terminal is configured with a target sub-band, and the transmission direction corresponding to the target sub-band differs from that of other frequency domain resources;
the candidate frequency domain resources include the target sub-band or the other frequency domain resources.

33. A processor-readable storage medium on which a computer program is stored, wherein the computer program, when executed by the processor, implements the steps in the information processing methods according to any one of claims 1-17.
